Europäisches Patentamt

(19) European Patent Office

Office européen des brevets

(11) Publication number: **0 019 575**
**B1**

## (12) EUROPEAN PATENT SPECIFICATION

(45) Date of publication of patent specification: **04.04.84**

(51) Int. Cl.³: **C 08 G 63/46, C 08 G 63/66**

(21) Application number: **80630012.5**

(22) Date of filing: **14.05.80**

(54) Random elastomeric copolyesters.

(30) Priority: **30.01.80 US 116703**
**17.05.79 US 40016**

(43) Date of publication of application:
**26.11.80 Bulletin 80/24**

(45) Publication of the grant of the patent:
**04.04.84 Bulletin 84/14**

(84) Designated Contracting States:
**DE FR GB IT**

(56) References cited:
**DE - A - 2 265 294**
**US - A - 3 383 343**
**US - A - 3 954 689**

**The file contains technical information submitted after the application was filed and not included in this specification**

(73) Proprietor: **THE GOODYEAR TIRE & RUBBER COMPANY**
**1144 East Market Street**
**Akron, Ohio 44316 (US)**

(72) Inventor: **Tung, William C. T.**
**1038 Beechwood Drive**
**Tallmadge Ohio 44278 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

Random elastomeric copolyesters

Technical field

The invention described herein relates to random linear copolyester having elastomeric properties and to shaped articles prepared from the copolyesters.

Background art

The prior art discloses elastic polyester resins made of certain ordered block copolymers as disclosed in U.S. Patent Nos. 3,023,192 and 3,954,689. Also, elastomeric properties are obtained in copolyesters having branched chain compounds in their structure as illustrated in U.S. Patent No. 4,103,624 and esters that contain side chains as shown in U.S. Patent No. 3,890,279. The present elastomeric copolyester are random copolymers and different from the prior art materials by being straight chain polymers that contain significant amounts of polyoxyalkylene groups within the polymer chain. These materials crystallize rapidly into opaque solids that are tough and elastic. They have a wide range of service temperatures and can be extruded into rods, tubes, hose, filaments and films and they can be injection molded or rotational molded into tires and parts having industrial uses.

Detailed description

The present copolyesters can be made by the usual procedures for making high molecular weight polyesters, including ester interchange, esterification and polycondensation or a combination of these processes. They are essentially random straight chain polymers without any dangling (i.e. pendant) groups attached either to the acid residues of the glycol residues and are copolyesters in that they contain units of different polyester-forming materials within the polymer chains.

It is an object of this invention to provide a synthetic polyester material capable of being formed into filaments, films and molded articles which possess high elastic recovery.

The objective is accomplished by providing elastomeric random, linear copolyesters having intrinsic viscosities ranging from 0.6 to 1.0 as determined in a 60/40 by volume mixed solvent system of phenol and tetrachloroethane at 30°C. and melting points ranging from 180°C. to 220°C., said copolyesters comprising a mixture of units in the polymer chain consisting of the polymeric reaction product from

(a) terephthalic acid or a lower $C_1$—$C_4$ dialkyl ester thereof,
   (b) dimer acid,
   (c) a poly(tetramethylene oxide)glycol having a molecular weight ranging from 1000 to 2000 and
(d) 1,4-butane diol

in which mixture the amount of terephthalic acid or lower $C_1$—$C_4$ dialkyl ester thereof ranges from 95.4 to 85.0 mole percent and the amount of dimer acid ranges from 4.6 to 15.0 mole percent, said percentages being based on the total number of moles of said acid constituents or reactive equivalents thereof in said mixture and in which mixture the amount of poly(tetramethylene oxide)glycol ranges from 2.0 to 12.0 moles percent and the amount of 1,4-butane diol ranges from 98.0 to 88.0 mole percent, plus a molar excess of said 1,4-butane diol ranging from 5.0 to 120.0 percent, said percentages being based on the total number of moles of said glycol constituents, less the molar excess of the 1,4-butane diol in said mixture. A more preferred range for the acid constituents or their reactive equivalents in the above-defined reaction mixture is from 95.4 to 86.8 mole percent for the terephthalic acid or lower $C_1$—$C_4$ dialkyl ester thereof and from 4.6 to 13.2 mole percent of the dimer acid. The terephthalic acid, the lower $C_1$—$C_4$ dialkyl ester thereof, and the dimer acid are referred to collectively as "acid-derived units" in the polymer chain, whereas the poly(tetramethylene oxide) glycol and the 1,4-butane diol are referred to collectively as "glycol-derived units" in the polymer chain.

As noted hereinabove a molar excess of the 1,4-butane diol, ranging from 5.0 to 120 percent of the number of moles of this diol needed to react with the moles of acid constituents or their reactive equivalents in the mixture, is employed. This excess is employed in order to insure reasonable rates of reaction between the glycol constituents and the acid constituents or the reactive equivalents thereof. As a result of the use of this excess of the 1,4-butane diol, the molar ratio of all the glycol constituents to all of the acid constituents or their reactive equivalents in the mixture will range from 1.05:1.0 to 2.20:1.0.

The dimer acid useful in preparing the copolyesters constituting the present invention is itself prepared from an unsaturated fatty acid containing 18 carbon atoms such as linoleic and linolenic acid or the monohydric alcohol esters thereof. The actual preparation and structure of dimerized $C_{18}$ fatty acids are described in J.A.C.S. *66*, 84 (1944) and U.S. Patent No. 2,347,562. Several different grades of dimer acid are available from commercial sources and these differ from each other primarily in the amount of the monobasic and trimer acids fractions and the degree of unsaturation. It is preferred, for purposes of this invention, the dimer acid be substantially free of the monobasic and trimer acids fractions and essentially completely saturated. Two different grades of dimer acid, which are useful in preparing the copolyesters herein described and meet the above requirements and which are available from Emery Industries, Inc. under the trade name Empol®, are Empol® 1010 and Empol® 1014. Empol® 1010 dimer acid is reported as typically containing 97% dimer acid, 3% trimer acid and essentially no monobasic acids and extremely low unsaturation and Empol® 1014 is reported as typically containing 95%, 4% and 1% of dimer, trimer and monobasic acids respectively.

The elastomeric, random, linear copolyesters of the present invention and derived from the reaction mixtures defined hereinabove are prepared by conventional and well-known techniques used in preparing high molecular linear polyesters. In general, the copolyesters are prepared by first subjecting the mixture of reactants to elevated temperatures under an inert gas atmosphere at atmospheric or superatmospheric pressures in the presence of a catalyst to promote the esterification or combined transesterification/esterification reactions, depending on the nature of the starting materials, between the glycol constituents and the acid constituents or reactive equivalents thereof comprising said mixtures. Known catalysts useful in promoting these reactions include the zinc, magnesium, calcium, manganese, lead and titanium containing compounds. The amount of catalyst used can be varied over a wide range. Generally, the amount used will be in the range of from 0.005 to 0.03 percent by weight based on the amount of reactants used. The temperatures normally employed to affect the esterification or combined transesterification/esterification reactions will range from 150°C to 240°C. and preferably from 190°C. to 230°C.

Following completion of the esterification or combined transesterification/esterification reaction, the low molecular weight oligomer product produced thereby is subjected to polycondensation. The polycondensation reaction will be carried out at temperatures ranging from 220°C. to 280°C. and preferably from 240°C. to 270°C. at pressures below 20 millibar (15 millimeters of mercury) and preferably below 1.33 millibar (1 millimeter of mercury) pressure in the presence of a polycondensation catalyst such as the known antimony, titanium, iron, zinc, cobalt, lead, manganese, niobium or germanium catalysts.

The following examples illustrate the preparation of the copolymers of the invention and set out some of their desirable properties. In these examples, parts or percentages are by weight unless otherwise specified.

Example I

An elastomeric, random linear copolyester was prepared from a mixture of reactants consisting of 5.16 kg (11.3 lbs) of dimethyl terephthalate, 2.99 kg (6.59 lbs) of 1,4-butane diol (inclusive of a 33% molar excess), and 2.72 kg (6 lbs) of poly(tetramethylene oxide)glycol having a molecular weight of 1000 (Polymeg 1000) were charged into a 11.3 kg (25 lb) reactor and reacted in the presence of 60 ppm of titanium, based on the weight of the charge, as catalyst at temperatures running from 174°C. to 215°C. After all the by-product methanol was distilled out, .726 kg (1.6 lbs) of dimer acid was added. The resultant mixture was further reacted at 215°C. for one hour. The pressure in the reactor was slowly reduced while the temperature was raised to 250°C. The polymerization was carried out at 254°C. and 66.65 kPa (.5 millimeters of mercury pressure). Three hours later, the copolyester produce was discharged. It had an intrinsic viscosity of 0.886. It was a white, tough, rubbery solid. It was ground and used for injection molding tests. The melting point was 206°C. (intrinsic viscosity in the examples of this specification was determined in a 60/40 phenol/tetrachloroethane mixed solvent at 30.0°C.).

Example II

The same procedure as employed in Example I was followed to produce a copolyester of the invention except that the quantities of reactants in the reaction mixture were as follows:

Dimethyl terephthalate=4.672 kg (10.3 lbs)
Butane Diol=2.817 kg (6.21 lbs) (inclusive of a 33% molar excess)
Polymeg 1000=2.72 kg (6 lbs)
Dimer Acid=1.179 kg (2.6 lbs)

The first intrinsic viscosity of the copolyester was 0.874 and the melting point was 190°C.

Example III

The procedure of Example I was followed to produce a copolyester from a mixture of reactants as follows:

Dimethyl terephthalate=4.08 kg (9 lbs)
Butane Diol=2.585 kg (5.7 lbs) (inclusive of a 33% molar excess)
Polymeg 1000=2.72 kg (6 lbs)
Dimer Acid=1.814 kg (4 lbs)

The copolyester product had an intrinsic viscosity of 0.869 and a melting point of 182°C.

3

Example IV

The polymers prepared in the above examples were injection molded into ASTM test pieces. The test results are listed below:

| Example | Tensile @ break | Elong. @ break | Stress @ 100% elong. | Tensile set @ 100° elong. | Hardness shore A | D |
|---------|-----------------|----------------|----------------------|---------------------------|-----------------|---|
| I | 2.115×10⁴ kPa (3068 psi) @ 480 elong. | 480% (NB)* | 1.2335×10⁴ kPa (1789 psi) | 47% | 93 | 46 |
| II | 1.8189×10⁴ kPa (2638 psi) @ 515% elong. | 515% (NB*) | 1.0976×10⁴ kPa (1592 psi) | 44% | 93 | 45 |
| III | 1.1721×10⁴ kPa (1700 psi) | 420% | .7894×10⁴ kPa (1145 psi) | 37% | 89 | 34 |

*NB=No break

Physical properties of films produced from copolyesters of this invention, by means of a flat die process, are set forth in Examples V, VI and VII below. In addition the mole percent of each of the reactants in the reaction mixture used to prepare the copolyester employed in the films tested is also indicated. With respect to the mole percentages indicated for the two glycol constituents, the value listed for the 1,4-butane diol component is exclusive of the approximately 33 percent excess of this diol present in the reaction mixtures employed to produce the various copolyesters.

Example V (Comparative)
99.5/0.5—98/2 Terephthalate/dimerate—butane diol/polymeg
27.9 micrometres (1.1 mil)       Heat seal T=22.6.67°C (440°F)
tensile at break                           break elongation

| | |
|---|---|
| MD 7.3776×10⁴ kPa (10,700 psi) | 360% |
| T   4,4817×10⁴ kPa (6,500 psi) | 520% |

Example VI
95.4/4.6—90.1/9.9 Terephthalate/dimer acid—butane diol/polymeg
35.5 micrometres (1.4 mil)       Heat seal T=212.78°C (415°F)
tensile at break                           break elongation

| | |
|---|---|
| MD  4.1370×10⁴ kPa (6,000 psi) | 580% |
| T    3.1717×10⁴ kPa (4,600 psi) | 660% |

Example VII
86.8/13.2—88.7/11.3 Terephthalate/dimerate—butane diol/polymeg
257.81 micrometres (101.5 mil)       Heat seal T=190.56°C (375°F)
tensile at break                                break elongation

| | |
|---|---|
| MD  1.7237×10⁴ kPa (2,500 psi) | 740% |
| T    1.5169×10⁴ kPa (2,200 psi) | 710% |

MD=Machine direction
T=Transverse direction

Film of copolyesters of the invention are useful in a number of packaging applications. They can be used as protective films to package textiles, tires, tubes and other rubber products. Film having high elongation will be useful for packaging fresh red meats and other food products.

If desired, the properties of these copolyesters can be modified somewhat by the incorporation of plasticizers, lubricants, fillers, pigmenting agents and stabilizers.

As set out before, the copolyesters will have melting points in the range from 180°C. to 220°C. This broad range of melting points allows for a wide range of service temperatures for these copolyesters.

The expression "melting point" of the copolyesters as used in this specification is the minimum

4

temperature at which a sample of polymer leaves a wet molten trail as it is drawn across the surface of a heated block of aluminum. Sometimes this temperature is called a polymer stick temperature.

Stabilizers are added to the copolyesters to provide additional stability against the deteriorating effects of heat or light. Phenols, amines, oximes, and salts of metals are suitable stabilizers.

The elastomeric copolyesters of this invention are characterized by high strength and high stretch modulus. These copolymers may be spun readily into yarns and into low denier filaments.

Yarns prepared from the copolyesters of this invention will find many uses in the textile and related fields. They may be used in the manufacture of two-way stretch, woven and knitted articles. Also, they may find use in non-woven fabrics and as bonding materials in paper and in the non-woven fabrics.

## Claims

1. As compositions of matter, elastomeric, random, linear copolyesters having intrinsic viscosities ranging from 0.6 to 1.0 as determined in a 60/40 by volume mixed solvent system of phenol and tetrachloroethane· at 30°C., and melting points ranging from 180°C. to 220°C., said copolyester comprising a mixture of units in the polymer chain consisting of the polymeric reaction product from

(a) terephthalic acid or a lower $C_1$—$C_4$ dialkyl ester thereof,
(b) dimer acid,
(c) a poly(tetramethylene oxide) glycol having a molecular weight ranging from 1000 to 2000 and
(d) 1,4-butane diol

in which mixture the amount of terephthalic acid or lower $C_1$—$C_4$ dialkyl ester thereof ranges from 95.4 to 85.0 mole percent and the amount of dimer acid ranges from 4.6 to 15.0 mole percent, said percentages being based on the total number of moles of said acid constituents or reactive equivalents thereof in said mixture and in which mixture the amount of poly(tetramethylene oxide) glycol ranges from 2.0 to 12.0 mole percent and the amount of 1,4-butane diol ranges from 98.0 to 88.0 mole percent, plus a molar excess of said 1,4-butane diol ranging from 5.0 to 120 percent, said mole percentages being based on the total number of moles of said glycols, less the molar excess of the 1,4-butane diol, in said mixture.

2. The copolyesters of claim 1 which are the reaction products of said reagents a, b, c and d, the amount of (a) ranging from 86.8 to 95.4 mole percent and the amount of dimer acid from 4.6 to 13.2 mole percent.

3. The copolyesters of Claim 1 comprised of the reaction product of reactants consisting of dimethyl terephthalate, dimer acid, poly(tetramethylene oxide) glycol having a molecular weight of 1000 and 1,4-butane diol.

4. A polyester according to Claim 1 in the form of a film ranging in thickness from 28 micrometres (1.1 mils) to 38 micrometres (1.5 mils), said film having a tensile strength of from $74.76 \times 10^6$ pascals (10,700 psi) to $17.23 \times 10^6$ pascals (2,500 psi) and an elongation at break ranging from 360 to 740 percent.

5. A copolyester according to Claim 1 in the form of a molded product.

6. A copolyester according to Claim 1 in the form of a filament.

7. A copolyester according to claim 1, which is made by reacting dimethyl terephthalate, 1,4-butane diol and said polytetramethylene glycol in the presence of a transesterification catalyst until substantially all the methanol formed from said reaction is distilled off, thereafter reacting the resultant product with said dimer acid, and continuing the reaction to form a copolyester having an intrinsic viscosity of 0.6 to 1.0 based upon a determination in a 60/40 phenol tetrachlorethane mixed solvent at 30.0°C., and a melting point of 180°C. to 220°C.

8. The copolyester of Claim 7 wherein the polytetramethylene glycol has a molecular weight of 1,000.

9. The copolyester of Claims 1, 3, 7 or 8 having intrinsic viscosities of at least 0.866.

## Patentansprüche

1. Masse aus elastomeren linearen Copolyestern mit willkürlicher Verteilung mit Intrinsikviskositäten zwischen 0,6 und 1,0, bestimmt in einem gemischten Lösungsmittelsystem aus Phenol und Tetrachlorethan (60/40, bezogen auf das Volumen) bei einer Temperatur von 30°C und Schmelzpunkte zwischen 180 und 220°C, wobei sich der Copolyester aus einer Mischung von Einheiten in der Polymerkette zusammensetzt, die aus dem polymeren Reaktionsprodukt aus

(a) Terephthalsäure und einem niederen $C_1$—$C_4$-Dialkylester davon
(b) Dimersäure,
(c) Poly(tetramethylenoxid)glykol mit einem Molekulargewicht von 1000 bis 2000 und
(d) 1,4-Butandiol

besteht, wobei in dieser Mischung die Menge an Terephthalsäure oder niederem $C_1$—$C_4$-Dialkylester davon zwischen 95,4 und 85,0 Mol-% und die Menge an Dimersäure zwischen 4,6 und 15,0 Mol-% Schwanken, die Prozentsätze sich auf die gesamte Anzahl der Mole der sauren Bestandteile oder der reaktiven Äquivalente davon in der Mischung beziehen, und wobei in der Mischung die Menge an Poly(tetramethylenoxid)glykol zwischen 2,0 und 12,0 Mol-% und die Menge an 1,4-Butandiol zwischen 98,0 und 88,0 Mol-% schwanken, plus einem molaren Überschuß an dem 1,4-Butandiol, der von 5,0 bis 120% variiert, wobei sich die Molprozentsätze auf die gesamte Anzahl der Mole der Glykole abzüglich des molaren Uberschusses an 1,4-Butandiol in der Mischung beziehen.

2. Copolyester nach Anspruch 1, dadurch gekennzeichnet, daß sie aus den Reaktionsprodukten der Reagentien a, b, c und d bestehen, wobei die Menge von (a) zwischen 86,8 und 95,4 Mol-% und die Menge an Dimersäure zwischen 4,6 und 13,2 Mol-% schwanken.

3. Copolyester nach Anspruch 1 aus dem Reaktionsprodukt von Reaktanten, die aus Dimethylterephthalat, Dimersäure, Poly(tetramethylenoxid)glykol mit einem Molekulargewicht von 1000 und 1,4-Butandiol bestehen.

4. Copolyester nach Anspruch 1 in Form eines Films mit einer Dicke zwischen 28 $\mu$m (1,1 mils) und 38 $\mu$m (1,5 mils), wobei der Film eine Zugfestigkeit von $73,76 \times 10^6$ Pascal (10700 psi) bis $17,23 \times 10^6$ Pascal (2500 psi) und eine Dehnung beim Bruch zwischen 360 und 740% besitzt.

5. Copolyester nach Anspruch 1 in Form eines geformten Produkts.

6. Copolyester nach Anspruch 1 in Form eines Fadens.

7. Copolyester nach Anspruch 1, dadurch gekennzeichnet, daß er hergestellt worden ist durch Umsetzung von Dimethylterephthalat, 1,4-Butanediol und dem Polytetramethylenglykol in Gegenwart eines Umesterungskatalysators bis im wesentlichen das ganze Methanol, das bei der Reaktion gebildet worden ist, abdestilliert worden ist, und anschließende Umsetzung des erhaltenen Produktes mit der Dimersäure und Fortsetzen der Reaktion unter Bildung eines Copolyesters mit einer Intrinsikviskosität von 0,6 bis 1,0, bestimmt in einem gemischten Lösungsmittel aus Phenol und Tetrachlorethan (60/40) bei 30°C, sowie mit einem Schmelzpunkt von 180 bis 220°C.

8. Copolyester nach Anspruch 7, dadurch gekennzeichnet, daß das Polytetramethylenglykol ein Molekulargewicht von 1000 besitzt.

9. Copolyester nach den Ansprüchen 1, 3, 7 oder 8 mit Intrinsikviskositäten von wenigstens 0,866.

**Revendications**

1. Compositions de copolyesters linéaires élastoméres désordonnés ayant des viscosités intrinsèques se situant entre 0,6 et 1 (déterminées dans un système solvant mixte 60/40 en volume de phénol et de tétrachloréthane à 30°C) et des points de fusion se situant entre 180 et 220°C, ces copolyesters comprenant, dans la chaîne polymère, un mélange de motifs constitués du produit réactionnel polymère:

(a) d'acide téréphtalique ou d'un de ses esters dialkyliques inférieurs en $C_1$—$C_4$,
(b) d'un acide dimère,
(c) d'un poly(oxyde de tétraméthylène)glycol ayant un poids moléculaires se situant entre 1.000 et 2.000, et
(d) de 1,4-butane-diol,

mélange dans lequel la quantité d'acide téréphtalique ou de son ester dialkylique inférieur en $C_1$—$C_4$ se situe entre 95,4 et 85% molaires, tandis que la quantité d'acide dimère se situe entre 4,6 et 15% molaires, ces pourcentages étant basés sur le nombre total de moles de ces constituants acides ou de leurs équivalents réactifs dans ce mélange dans lequel la quantité du poly(oxyde de tétraméthylène)glycol se situe entre 2 et 12% molaires, alors que la quantité du 1,4-butanediol se situe entre 98 et 88% molaires plus un excès molaire de 5 à 120% de ce 1,4-butane-diol, ces pourcentages molaires étant basés sur le nombre total de moles de ces glycols, moins l'excès molaire du 1,4-butane-diol contenu dans ce mélange.

2. Copolyesters suivant la revendication 1, caractérisés en ce qu'ils sont les produits réactionnels des réactifs a, b, c et d, la quantité de (a) se situant entre 86,8 et 95,4% molaires, tandis que la quantité de l'acide dimère se situe entre 4,6 et 13,2% molaires.

3. Copolyesters suivant la revendication 1, caractérisés en ce qu'ils sont constitués du produit réactionnel de réactifs comprenant le téréphtalate de diméthyle, un acide dimère, le poly(oxyde de tétraméthylène)glycol ayant un poids moléculaire de 1.000 et le 1,4-butane-diol.

4. Copolyester suivant la revendication 1 sous forme d'une pellicule d'une épaisseur se situant entre 28 micromètres (1,1 millième de pouce) et 38 micromètres (1,5 millième de pouce), cette pellicule ayant une résistance à la traction de $73,76 \times 10^6$ pascals (10.700 livres/pouce carré) à $17,23 \times 10^6$ pascals (2.500 livres/pouce carré) et un allongement à la rupture se situant entre 360 et 740%.

5. Copolyester suivant la revendication 1 sous forme d'un produit moulé.

6. Copolyester suivant la revendication 1 sous forme d'un filament.

7. Copolyester suivant la revendication 1, caractérisé en ce qu'il est obtenu en faisant réagir le téréphtalate de diméthyle, le 1,4-butane-diol et le polytétraméthylène-glycol en présence d'un catalyseur de transesterification jusqu'à ce que pratiquement la totalité du méthanol formé à la suite de cette réaction soit séparé par distillation, puis en faisant réagir le produit obtenu avec l'acide dimère et en poursuivant la réaction pour former un copolyester ayant une viscosité intrinsèque de 0,6 à 1 (déterminée dans un solvant mixte 60/40 de phénol/tétrachloréthane à 30°C) et un point de fusion de 180 à 220°C.

8. Copolyester suivant la revendication 7, caractérisé en ce que le polytétraméthylène-glycol a un poids moléculaire de 1.000.

9. Copolyester suivant la revendication 1, 3, 7 ou 8, ayant des viscosités intrinsèques d'au moins 0,866.